# EUROPÄISCHE PATENTSCHRIFT

(11) **EP 2 684 095 B1**
(45) Veröffentlichungstag und Bekanntmachung des Hinweises auf die Patenterteilung: **24.12.2014**
(21) Anmeldenummer: 12713580.4
(22) Anmeldetag: 02.03.2012
(51) Int. Cl.: G02F 1/225, G02F 1/025

(54) **ELEKTROOPTISCHER MODULATOR**
ELECTROOPTIC MODULATOR
MODULATEUR ELECTROOPTIQUE

(30) Priorität: 11.03.2011 DE 102011005422
(43) Veröffentlichungstag der Anmeldung: 15.01.2014
(73) Patentinhaber: Technische Universität Berlin, 10623 Berlin (DE); IHP GmbH-Innovations for High Performance Microelectronics / Leibniz-Institut für innovative Mikroelektronik, 15236 Frankfurt / Oder (DE)
(72) Erfinder: MEISTER, Stefan, 12587 Berlin (DE); AL-SAADI, Aws, 10559 Berlin (DE); EICHLER, Hans, Joachim, 12105 Berlin (DE); FRANKE, Bülent, 13353 Berlin (DE); ZIMMERMANN, Lars, 10623 Berlin (DE); TILLACK, Bernd, 15234 Frankfurt (Oder) (DE)
(74) Vertreter: Fischer, Uwe
(86) Internationale Anmeldenummer: PCT/DE2012/200012
(87) Internationale Veröffentlichungsnummer: WO 2012/122981

(56) Entgegenhaltungen:
- WO-A1-2007/141956
- ZHI-YONG LI ET AL: "Silicon waveguide modulator based on carrier depletion in periodically interleaved PN junctions", OPTICS EXPRESS, Bd. 17, Nr. 18, 31. August 2009 (2009-08-31), Seite 15947, XP55026582, ISSN: 1094-4087, DOI: 10.1364/OE.17.015947

## Beschreibung

Die Erfindung bezieht sich auf einen elektrooptischen Modulator mit den Merkmalen gemäß dem Oberbegriff des Patentanspruchs 1.

Im Rahmen der nachfolgenden Beschreibung wird unter dem Begriff "Licht" jedwede optische Strahlung verstanden, unabhängig davon, ob die optische Strahlung für den Menschen sichtbar ist oder nicht. Die Begriffe "Licht" oder "optische Strahlung" schließen somit beispielsweise ultraviolette Strahlung oder infrarote Strahlung ein. Entsprechendes gilt für den Begriff "Lichtwellenleiter", bei dem es sich um einen Wellenleiter für optische Strahlung handeln soll.

Für die Modulation optischer Signale in Verbindung mit Wellenleitern gibt es vielfache Anwendungsbereiche, wie beispielsweise in der Kommunikation, der Sensorik, der Bildübertragung etc. Insbesondere in Halbleitermaterialien (wie z.B. Silizium, InP, GaAs) integrierte elektrooptische Modulatoren spielen dabei eine bedeutende Rolle. Elektrooptische Modulatoren, basierend auf Silizium-Wellenleitern, gewinnen zunehmend an Interesse, da diese eine Schlüsselkomponente für optische Breitbandübertragung für die sogenannte On-Chip, Chip-to-Chip, Chip-to-Board etc.-Kommunikation darstellen. Mit optischen Verbindungen lassen sich wesentlich höhere Bandbreiten, bei moderatem Energieverbrauch, verglichen mit den bisher üblichen metallbasierten Verbindungen erreichen.

Es sind verschiedene Bauformen für Lichtmodulatorbauteile für solche Übertragungsstrecken bekannt. So werden beispielsweise in der Nachrichtenübertragung mit hohen Datenraten häufig Mach-Zehnder Modulatoren eingesetzt. Bei den Mach-Zehnder Modulatoren auf Wellenleiterbasis (Liu et al. Optics Express, 15, 660, 2007) durchläuft das Licht in mindestens einem Arm des Modulators ein elektrooptisches Material. Der Brechungsindex (oder auch die Absorption) des elektrooptischen Materials lässt sich durch Anlegen einer Spannung variieren. Dadurch erfährt die Lichtwelle in diesem Arm eine Phasenverschiebung. Beträgt die Phasenverschiebung π (oder ein ganzzahliges Vielfaches von n) gegenüber der Lichtwelle, die den anderen Arm des Modulators durchläuft, kommt es bei der Überlagerung der beiden Wellen zu einer Auslöschung. Um eine Phasenverschiebung von π zu erreichen, muss das Licht eine Wegstrecke, üblicherweise im Millimeter- bis Zentimeterbereich, im elektrooptischen Material durchlaufen. Entsprechend groß ist die minimale Baulänge eines Mach-Zehnder Modulators.

Desweiteren werden zur Modulation optischer Signale auch Ringresonatoren genutzt (Xu et al. Nature, 435, 325, 2005). Die Baugrößen von Ringresonatoren sind wesentlich geringer als bei Mach-Zehnder Modulatoren, da, durch die hohe Zahl der Umläufe des Lichts im Resonator, die benötigte Wegstrecke im elekrooptischen Material wesentlich geringer ist (bei vergleichbaren elektrooptischen Koeffizienten).

Von Schmidt et al. (Optics Express, 16, 334, 2008) wurde ein elektrooptischer Modulator demonstriert, der auf einer Fabry-Perot Struktur basiert, welcher durch einen sogenannten eindimensionalen photonischen Kristall realisiert wurde (siehe auch Foresi et al. (Nature, 390, 143, 1997)). Hierbei wurde der elektrooptische Bereich durch einen p-i-n dotierten Bereich realisiert, welcher durch Ladungsträgerinjektion geschaltet wird. Mit diesem Modulator konnten allerdings nur Modulationsfrequenzen von 250 MHz erreicht werden.

Zur Erzeugung des elektrooptischen Effekts werden im Halbleitermaterial Bereiche im oder nahe des Wellenleiters dotiert. So werden beispielsweise in Silicon-On-Insulator (SOI) Wellenleitern durch Dotierung eine p-i-n oder auch p-n Diodenstruktur erzeugt (Reed et al., Nature Photonics, 4, 518, 2010). Mit Hilfe dieser Struktur kann die Ladungsträgerkonzentration in den Wellenleitern verändert werden. So wird durch den sogenannten Free-Carrier-Plasma-Dispersion Effekt der Brechungsindex und die Absorption im Wellenleiter verändert (Soref et al., IEEE J. Quant. Electrn., 23, 123, 2004). Dabei können durch Anlegen einer Spannung an die Diode in Durchlassrichtung Ladungsträger in den Wellenleiter injiziert werden (genannt Injektion), oder durch Anlegen einer Spannung an die Diode in Sperrrichtung Ladungsträger aus dem Wellenleiter abgesaugt werden (genannt Depletion oder Verarmung). Es ist bekannt, dass durch das Absaugen der Ladungsträger (Depletion) höhere Modulationsgeschwindigkeiten erreicht werden können als durch die Injektion von Ladungsträgern.

Bei elektrooptischen Lichtmodulatoren nach dem Prinzip "Injektion" werden die p- und n-dotierten Bereiche nahe dem Wellenleiter ausgeführt, während der Kernbereich des Wellenleiters in der Regel undotiert (oder sehr niedrig dotiert) bleibt. Durch die Entfernung der dotierten Bereiche zum Wellenleiter sind absorptive Verluste gering, und es können hohe Dotierungen ausgeführt werden. Mit hochdotierten p-i-n Strukturen können hohe elektrooptische Effekte erzielt werden. In (Green et al., Opt. Express, 15, 17106, 2007) beträgt die p-bzw. n-Dotierung 10²⁰ cm⁻³ und es werden damit Brechzahländerungen von 4*10⁻³ erreicht. Mit höheren Brechzahländerungen und höheren elektrooptischen Effekten können kürzere Modulatorlängen bzw. Resonatorlängen realisiert werden.

Bei elektrooptischen Lichtmodulatoren nach dem Prinzip "Depletion" (Verarmung) wird der Wellenleiterkern selbst p- und/oder n-dotiert. Durch die Ausführung der dotierten Bereiche innerhalb des Wellenleiterkerns sind die absorptiven Verluste relativ hoch, so dass nur geringe Dotierungen ausgeführt werden können. Die Modulation des Lichts erfolgt durch eine Reduktion der Ladungsträger im Lichtwellenleiter.

WO 2007/141956 A1 offenbart einen elektrooptischen Modulator gemäß dem Oberbegriff des Patentanspruchs 1.

Der Erfindung liegt die Aufgabe zugrunde, einen elektrooptischen Modulator anzugeben, bei dem sich ein hoher Modulationseffekt bei gleichzeitig verhältnismäßig geringer optischer Dämpfung erreichen lässt.

Diese Aufgabe wird erfindungsgemäß durch einen elektrooptischen Modulator mit den Merkmalen gemäß Patentanspruch 1 gelöst. Vorteilhafte Ausgestaltungen des erfindungsgemäßen elektrooptischen Modulators sind in Unteransprüchen angegeben.

Danach ist erfindungsgemäß vorgesehen, dass in dem Resonator zumindest zwei dotierte Halbleiterabschnitte - in Längsrichtung des Resonators gesehen - beabstandet zueinander angeordnet sind, wobei sich die zumindest zwei dotierten Halbleiterabschnitte jeweils lokal in einem Intensitätsminimum der stehenden optischen Welle befinden.

Ein wesentlicher Vorteil des erfindungsgemäßen elektrooptischen Modulators ist darin zu sehen, dass die zwei dotierten Halbleiterabschnitte, die im Resonator angeordnet sind, relativ hoch dotiert werden können, so dass sich ein relativ starker elektrooptischer Effekt im Resonator erreichen lässt. Eine zusätzliche Dämpfung des sich im Resonator ausbreitenden Lichts wird durch die dotierten Halbleiterabschnitte jedoch nicht, zumindest in nur vernachlässigbarem Umfang, hervorgerufen, da sich nämlich die dotierten Halbleiterabschnitte erfindungsgemäß jeweils in einem Intensitätsminimum der im Resonator stehenden optischen Welle befinden. Der erfindungsgemäße Gedanke besteht also darin, dass durch die Anordnung der dotierten Halbleiterabschnitte im Bereich der Intensitätsminima eine zusätzliche Dämpfung durch die dotierten Halbleiterabschnitte vermieden wird, da diese von der im Resonator propagierenden Welle quasi "optisch" nicht gesehen werden. Dies ermöglicht es, relativ hohe Dotierungen in den dotierten Halbleiterabschnitten vorzusehen, wodurch sich - je nach Ansteuerung des elektrooptischen Modulators - ein relativ großer elektrooptischer Effekt im Resonator hervorrufen lässt. Beispielsweise lässt sich durch eine Veränderung der Brechzahl im Resonator die Resonanzwellenlänge des Resonators verschieben und somit die Transmission und/oder die Reflektion des Resonators beeinflussen, so dass beispielsweise ein optischer Schalteffekt hervorgerufen werden kann.

Gemäß einer besonders bevorzugten Ausgestaltung des Modulators ist vorgesehen, dass in dem Resonator ein Lichtwellenleiter aus halbleitendem Material vorhanden ist, sich die Längsrichtung des Lichtwellenleiters entlang der Längsrichtung des Resonators erstreckt und die zumindest zwei dotierten Halbleiterabschnitte jeweils durch einen dotierten Halbleiterabschnitt des Lichtwellenleiters gebildet werden. Durch einen Lichtwellenleiter, dessen Längsrichtung mit der Längsrichtung des Resonators zusammenfällt, lässt sich in einfacher Weise eine Lichtwellenführung zwischen den Resonatorenden des Resonators erreichen. Gleichzeitig kann das halbleitende Material des Lichtwellenleiters für die Ausbildung der zumindest zwei dotierten Halbleiterabschnitte, mit denen eine elektrooptische Modulation des Resonators hervorgerufen wird, genutzt werden.

Um die Lichtwellenleiterdämpfung im Lichtwellenleiter so gering wie möglich zu halten, wird es als vorteilhaft angesehen, wenn sich alle dotierten Halbleiterabschnitte des Lichtwellenleiters ausschließlich in Intensitätsminima der stehenden optischen Welle befinden.

Als besonders vorteilhaft wird es weiterhin angesehen, wenn einer der zumindest zwei dotierten Halbleiterabschnitte p-dotiert und der andere n-dotiert ist und die dotierten Halbleiterabschnitte eine pn- oder eine pin-Diode bilden, deren "Dotierungsabfolge" sich entlang der Längsrichtung des Resonators erstreckt. Mit Hilfe einer pn- oder pin-Diodenstruktur lässt sich in sehr einfacher Weise die Ladungsträgerdichte zwischen den dotierten Halbleiterabschnitten, also dort, wo sich die Intensitätsmaxima der im Resonator stehenden optischen Welle befinden, erhöhen oder erniedrigen, wodurch sich beispielsweise eine Verschiebung der Resonanzfrequenz des Resonators und damit eine Modulation des im Lichtwellenleiter geführten Lichts hervorrufen lässt.

Vorzugsweise wird vorgesehen, dass sich durch Anlegen einer elektrischen Spannung an die zumindest zwei dotierten Halbleiterabschnitte die Brechzahl und/oder die Absorption und/oder die Ladungsträgerdichte zwischen den zumindest zwei dotierten Halbleiterabschnitten erhöhen oder verringern und damit das optische Verhalten des Resonators verstellen lässt. Die Resonatorgrenzen des Resonators werden vorzugsweise jeweils durch einen Spiegelabschnitt begrenzt. Die Spiegelabschnitte können jeweils durch Spiegelschichten gebildet sein. Als besonders vorteilhaft wird es jedoch angesehen, wenn zumindest einer der Spiegelabschnitte durch einen Lichtwellenleiterabschnitt gebildet ist, in dem Löcher vorhanden sind.

Zusätzlich oder alternativ kann vorgesehen sein, dass zumindest einer der Spiegelabschnitte durch einen Lichtwellenleiterabschnitt gebildet ist, dessen Breite und/oder Höhe variiert. Sowohl Löcher als auch eine Breiten- und/oder Höhenvariation lassen sich durch Lithographie und/oder Ätzverfahren einbringen, ohne dass zusätzliche Materialien zur Bildung der Spiegelabschnitte erforderlich wären, so dass die Herstellung der Spiegelabschnitte sehr kostengünstig und gleichzeitig sehr reproduzierbar möglich ist.

Bei einer besonders bevorzugten Ausgestaltung des Modulators ist vorgesehen, dass der elektrooptische Modulator einen Lichtwellenleiter aus Halbleitermaterial umfasst, der mit einem ersten Abschnitt einen ersten Spiegelabschnitt des Resonators bildet, mit einem zweiten Abschnitt im Inneren des Resonators angeordnet ist und mit einem dritten Abschnitt einen zweiten Spiegelabschnitt des Resonators bildet. Bei dieser Ausgestaltung wird also ein Wellenleiter durch den Resonator hindurchgeführt, wobei eine Modulation des Lichts im Bereich des zweiten Abschnitts bzw. im Bereich des Resonators erfolgt.

Vorzugsweise handelt es sich bei dem Lichtwellenleitermaterial um Silizium, da Silizium das kommerziell dominierende Halbleitermaterial ist. Besonders bevorzugt wird zur Herstellung des Modulators und des Lichtwellenleiters sogenanntes SOI (SOI: Silicon on Insulator)-Material verwendet, das in der Elektronik weit verbreitet ist und mit dem sich in relativ einfacher Weise aufgrund des Brechzahlsprungs zur vergrabenen Siliziumoxidschicht sehr gut führende optische Lichtwellenleiter herstellen lassen.

Mit Blick auf eine einfache Kontaktierung der dotierten Halbleiterabschnitte wird es als vorteilhaft angesehen, wenn in dem Resonator eine Vielzahl an dotierten Halbleiterabschnitten - in Längsrichtung des Resonators gesehen - beabstandet zueinander angeordnet ist, und die dotierten Halbleiterabschnitte durch kammförmige Leiterbahnen aus dotiertem Halbleitermaterial kontaktiert sind, die sich jeweils von einem Intensitätsminimum der stehenden optischen Welle des Lichtwellenleiters, vorzugsweise senkrecht, wegerstrecken. Die Dotierungsart (n- oder p-Dotierung) der kammförmigen Leiterbahnen ist vorzugsweise jeweils mit der Dotierungsart des individuell zu kontaktierenden dotierten Halbleiterabschnitts identisch.

Die Erfindung bezieht sich außerdem auf ein Verfahren zum Modulieren optischer Strahlung, bei dem die optische Strahlung in einen elektrooptischen Modulator mit mindestens einem optischen Resonator eingespeist wird, wodurch sich in dem Resonator eine stehende optische Welle ausbildet, und zumindest zwei dotierte Halbleiterabschnitte elektrisch angesteuert werden, die - in Längsrichtung des Resonators gesehen - beabstandet zueinander angeordnet sind und sich jeweils lokal in einem Intensitätsminimum der stehenden optischen Welle befinden.

Die Erfindung wird nachfolgend anhand von Ausführungsbeispielen näher erläutert; dabei zeigen beispielhaft
- Figur 1: ein erstes Ausführungsbeispiel für einen erfindungsgemäßen elektrooptischen Modulator mit zwei Spiegelschichten zur Bildung von Resonatorgrenzen,
- Figur 2: ein zweites Ausführungsbeispiel für einen erfindungsgemäßen Modulator, bei dem die Resonatorgrenzen durch Lichtwellenleiterabschnitte gebildet sind,
- Figur 3: ein drittes Ausführungsbeispiel für einen erfindungsgemäßen Modulator, bei dem die Spiegel des Resonators durch Lichtwellenleiterabschnitte gebildet sind, in denen Löcher vorhanden sind,
- Figur 4: ein viertes Ausführungsbeispiel für einen erfindungsgemäßen Modulator, bei dem die Spiegel des Resonators durch Lichtwellenleiterabschnitte gebildet sind, deren Breite entlang der Längsrichtung des Lichtwellenleiters variiert, und
- Figur 5: ein fünftes Ausführungsbeispiel für einen erfindungsgemäßen Modulator.

In den Figuren werden der Übersicht halber für identische oder vergleichbare Komponenten stets dieselben Bezugszeichen verwendet.

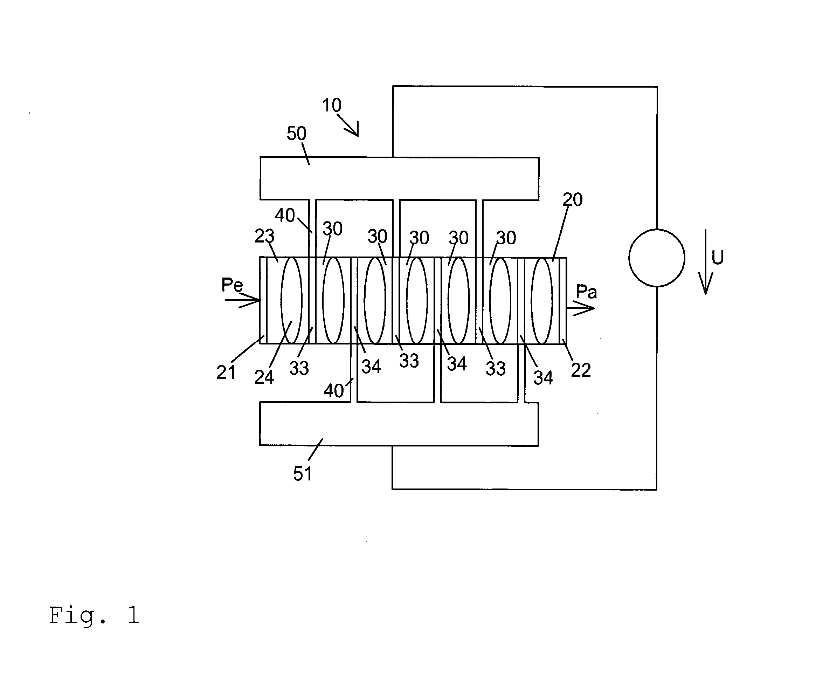

In der Figur 1 erkennt man einen elektrooptischen Modulator 10, der einen Resonator 20 umfasst. Die Resonatorgrenzen des Resonators 20 werden durch zwei Spiegelabschnitte 21 und 22 gebildet. In dem Resonator 20 und zwischen den beiden Spiegelabschnitten 21 und 22 befindet sich ein Lichtwellenleiter 23, der mit der Amplitude Pe einfallende optische Strahlung in Längsrichtung des Resonators 20 führt.

In der Figur 1 lässt sich erkennen, dass sich in dem Resonator 20 eine stehende optische Welle ausbildet. Die Maxima dieser optischen Welle sind in der Figur 1 durch Ellipsen visualisiert, die mit dem Bezugszeichen 24 gekennzeichnet sind.

Innerhalb des Resonators 20 sind fünf Dioden angeordnet, die mit den Bezugszeichen 30 gekennzeichnet sind. Jede der Dioden umfasst jeweils einen p-dotierten Halbleiterabschnitt, der mit dem Bezugszeichen 33 gekennzeichnet ist, sowie einen n-dotierten Halbleiterabschnitt, der mit dem Bezugszeichen 34 gekennzeichnet ist.

Die Dioden 30 sind elektrisch parallel geschaltet und stehen über kammförmige Leiterbahnen 40 mit zwei Kontaktanschlüssen 50 und 51 in Verbindung. Die beiden Kontaktanschlüsse 50 und 51 sind mit einer elektrischen Spannung U beaufschlagt, mit der der elektrooptische Modulator 10 elektrisch angesteuert und die Resonanzfrequenz des Resonators 20 moduliert wird.

Die kammförmigen Leiterbahnen 40 sind jeweils durch dotiertes Halbleitermaterial gebildet, wobei die Leiterbahnen zur Kontaktierung der p-dotierten Halbleiterabschnitte 33 p-dotiert und die Leiterbahnen zur Kontaktierung der n-dotierten Halbleiterabschnitte 34 n-dotiert sind.

Um zu vermeiden, dass die kammförmigen Leiterbahnen 40 die optische Strahlung im Lichtwellenleiter 23 dämpfen, stehen die Leiterbahnen 40 vorzugsweise senkrecht, zumindest nahezu senkrecht, auf der Längsrichtung des Resonators 20 und somit senkrecht, zumindest näherungsweise senkrecht, zur Längsrichtung des Wellenleiters 23.

Da sich die p-dotierten Halbleiterabschnitte 33 sowie die n-dotierten Halbleiterabschnitte 34 der fünf Dioden 30 jeweils in einem Intensitätsminimum der im Resonator 20 stehenden optischen Welle befinden, wird die optische Welle von der Dotierung dieser dotierten Halbleiterabschnitte weitgehend unbeeinflusst bleiben.

Handelt es sich bei den Dioden 30 um pin-Dioden, so wird der elektrooptische Modulator 10 vorzugsweise in einem Injektionsmodus betrieben. Hierzu werden die Dioden 30 mit Hilfe einer Flussspannung in Durchlassrichtung betrieben, so dass die p-dotierten Halbleiterabschnitte 33 sowie die n-dotierten Halbleiterabschnitte 34 Ladungsträger in Form von Elektronen und Löchern in die zwischen den dotierten Halbleiterabschnitten 33 und 34 befindlichen undotierten oder nur schwach dotierten Lichtwellenleiterabschnitte injizieren. Dies führt zu einem Anstieg der Ladungsträgerdichte und zu einer Reduktion der Brechzahl und/oder zu einer Erhöhung der Absorption im Lichtwellenleiter 23, so dass die Resonanzfrequenz des Resonators 20 verstimmt wird und sich die Amplitude Pa der den Resonator 20 verlassenden optischen Welle verändern wird. Durch eine Injektion von Ladungsträgern mit Hilfe einer Flussspannung lässt sich somit eine Modulation der optischen Strahlung erreichen. Zur Erhöhung der Modulationsgeschwindigkeit können nach Injektion der Ladungsträger die Dioden mit einer Sperrspannung beaufschlagt werden, um die injizierten Ladungsträger abzusaugen.

Ist der Bereich zwischen den p-dotierten Halbleiterabschnitten 33 und den n-dotierten Halbleiterabschnitten 34 ebenfalls dotiert, so dass es sich bei den Dioden 30 um pn-Dioden handelt, so werden die Dioden vorzugsweise mit einer Sperrspannung beaufschlagt. Durch eine Sperrspannung wird die zwischen den dotierten Halbleiterabschnitten 33 und 34 jeweils vorhandene Raumladungszone vergrößert, so dass sich ein relativ großes Gebiet mit sehr niedriger Ladungsträgerdichte bilden lässt. Wird nun die Sperrspannung moduliert bzw. verändert, so verändert sich auch die Größe der Raumladungszone, was wiederum eine Änderung der Ladungsträgerdichte und der Brechzahl im Lichtwellenleiter 23 und damit eine Verstimmung der Resonanzfrequenz des Resonators 20 zur Folge hat. Dadurch tritt ein Modulationseffekt in Form einer Modulation der Amplitude Pa der optischen Strahlung am Ausgang des Resonators 20 auf.

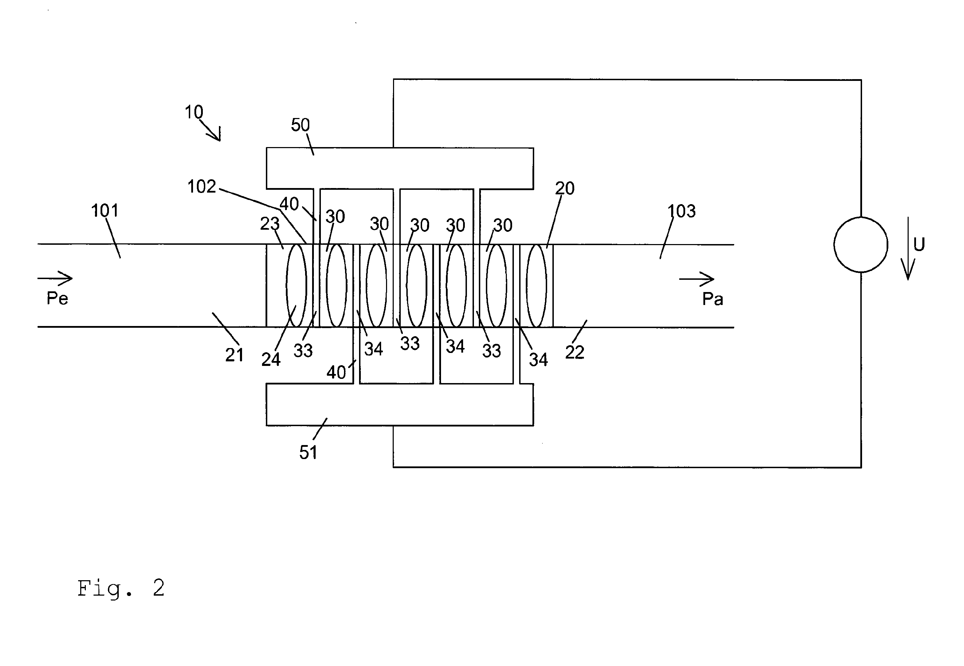

Figur 2 zeigt ein zweites Ausführungsbeispiel für einen elektrooptischen Modulator. Bei diesem Ausführungsbeispiel sind drei Lichtwellenleiterabschnitte 101, 102 und 103 vorhanden.

Der erste Lichtwellenleiterabschnitt 101 bildet einen ersten Spiegelabschnitt 21 am Eingang des Resonators 20. Der dritte Lichtwellenleiterabschnitt 103 bildet einen zweiten Spiegelabschnitt 22 am Ausgang des Resonators 20. Der zweite Lichtwellenleiterabschnitt 102 befindet sich im Inneren des Resonators 20 und führt die optische Strahlung in dem Abschnitt zwischen den beiden Spiegelabschnitten 21 und 22.

Die Lichtwellenleiterabschnitte 101 und 103 können beispielsweise interne Gitter umfassen, die in der Figur 2 nicht gezeigt sind.

Wird optische Strahlung mit der Eingangsamplitude Pe in den ersten Lichtwellenleiterabschnitt 101 eingestrahlt und in den Resonator 20 eingekoppelt, so wird eine stehende Welle innerhalb des Resonators 20 gebildet. In den Bereichen zwischen den Intensitätsmaxima bzw. in den Abschnitten mit den Intensitätsminima der optischen Welle befinden sich die dotierten Halbleiterabschnitte 33 und 34 der fünf Dioden 30, wie dies bereits im Detail im Zusammenhang mit der Figur 1 erläutert worden ist. Die Dioden 30 sind über kammförmige Leiterbahnen 40, die sich senkrecht von dem zweiten Lichtwellenleiterabschnitt 102 wegerstrecken, mit Kontaktanschlüssen 50 und 51 verbunden, über die sich eine elektrische Spannung U an den elektrooptischen Modulator 10 anlegen lässt.

Wird nun durch Anlegen einer Flussspannung oder einer Sperrspannung die Ladungsträgerdichte im Resonator 20 verändert, so wird sich auch die Amplitude Pa der optischen Strahlung am Ausgang des Modulators 10 verändern. Diesbezüglich sei auf die obigen Ausführungen im Zusammenhang mit der Figur 1 verwiesen.

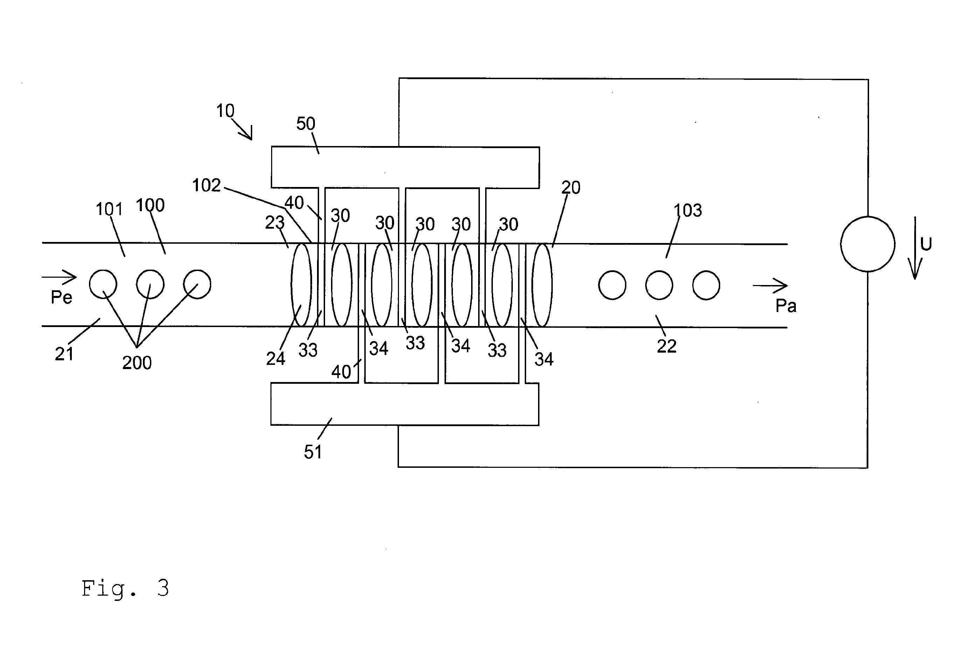

Die Figur 3 zeigt ein drittes Ausführungsbeispiel für einen elektrooptischen Modulator 10. Bei diesem Ausführungsbeispiel ist ein durchgehender SOI-Lichtwellenleiter 100 vorhanden, der einen ersten Lichtwellenleiterabschnitt 101, einen zweiten Lichtwellenleiterabschnitt 102 und einen dritten Lichtwellenleiterabschnitt 103 umfasst.

In dem ersten Lichtwellenleiterabschnitt 101 und dem dritten Lichtwellenleiterabschnitt 103 des SOI-Lichtwellenleiters 100 befinden sich Löcher, die mit dem Bezugszeichen 200 gekennzeichnet sind. Durch die Löcher 200 werden in dem SOI-Lichtwellenleiter 100 Spiegelabschnitte 21 und 22 gebildet, die die Resonatorgrenzen des Resonators 20 bilden. Die Funktionsweise des elektrooptischen Modulators 10 gemäß Figur 3 entspricht im Übrigen der Funktionsweise des elektrooptischen Modulators gemäß Figur 2, so dass diesbezüglich auf die obigen Ausführungen verwiesen sei.

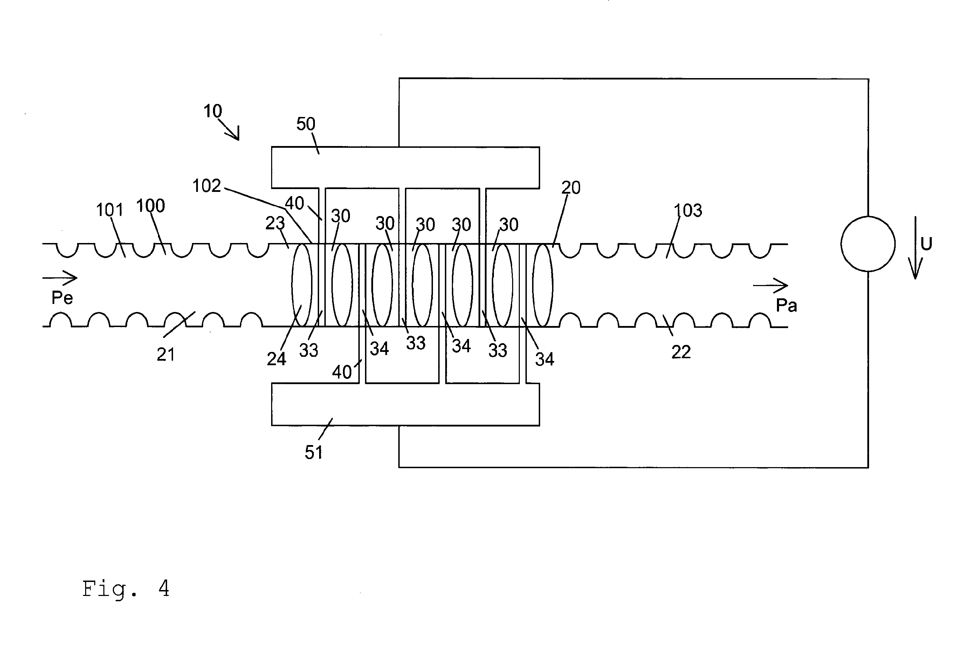

Die Figur 4 zeigt ein viertes Ausführungsbeispiel für einen elektrooptischen Modulator. Bei diesem Ausführungsbeispiel sind die Ränder des SOI-Lichtwellenleiters 100 im ersten Lichtwellenleiterabschnitt 101 sowie im dritten Lichtwellenleiterabschnitt 103 geriffelt, wodurch Spiegelabschnitte 21 und 22 für den Resonator 20 gebildet werden. Durch die Riffelung des SOI-Lichtwellenleiters 100 kommt es im Resonator 20 zu einer stehenden optischen Welle, die durch Anlegen einer elektrischen Spannung U an die Kontaktanschlüsse 50 und 51 des elektrooptischen Modulators 10 moduliert werden kann, wie dies im Zusammenhang mit den Figuren 1 bis 3 oben bereits erläutert worden ist.

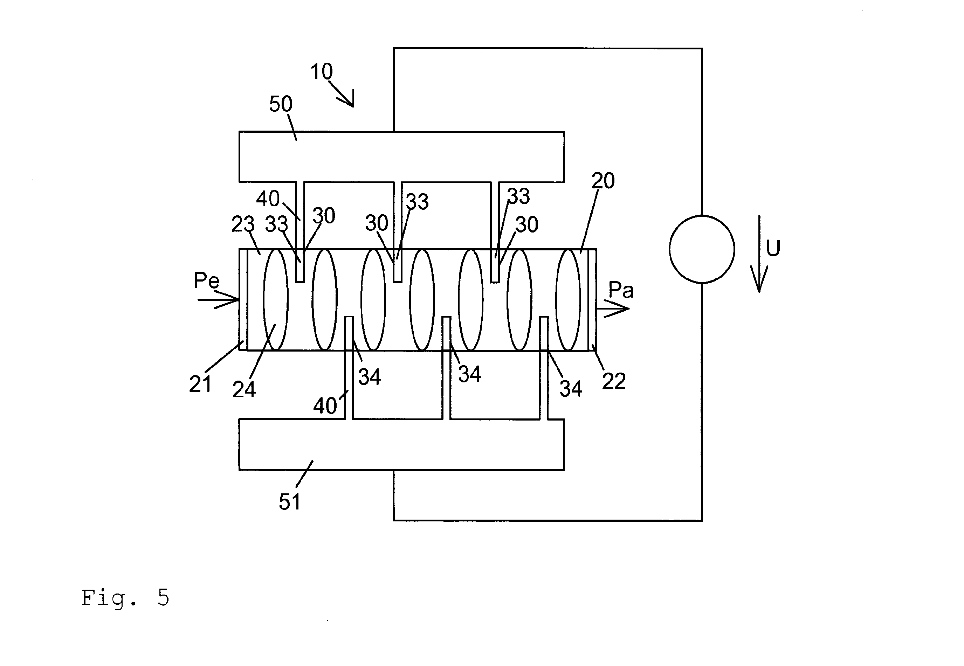

In der Figur 5 sieht man einen elektrooptischen Modulator 10, der im Wesentlichen dem elektrooptischen Modulator 10 gemäß Figur 1 entspricht. Im Unterschied dazu sind bei dem elektrooptischen Modulator 10 gemäß Figur 5 die p-dotierten Halbleiterabschnitte 33 und die n-dotierten Halbleiterabschnitte 34 der Dioden 30 in Richtung der Wellenausbreitung bzw. in Längsrichtung des Lichtwellenleiters 23 gesehen überschneidungsfrei. Es lässt sich erkennen, dass die p-dotierten Halbleiterabschnitte 33 und die n-dotierten Halbleiterabschnitte 34 jeweils nur ca. zu einem Drittel in den Lichtwellenleiter 23 hineinragen.

### Bezugszeichenliste

- 10: elektrooptischer Modulator
- 20: Resonator
- 21: Spiegelabschnitt
- 22: Spiegelabschnitt
- 23: Lichtwellenleiter
- 24: Intensitätsmaximum der stehenden Welle
- 30: Dioden
- 33: p-dotierter Halbleiterabschnitt
- 34: n-dotierter Halbleiterabschnitt
- 40: Leiterbahn
- 50, 51: Kontaktanschlüsse
- 100: SOI-Lichtwellenleiter
- 101-103: Lichtwellenleiterabschnitte
- 200: Löcher

- Pe: einfallende optische Strahlung
- Pa: optische Strahlung am Ausgang
- U: Spannung

## Patentansprüche

1. Elektrooptischer Modulator (10) zum Modulieren optischer Strahlung einer vorgegebenen Wellenlänge, wobei der elektrooptische Modulator (10) mindestens einen optischen Resonator (20) aufweist, in dem sich für die vorgegebene Wellenlänge eine stehende optische Welle ausbilden kann, wobei in dem Resonator zumindest zwei dotierte Halbleiterabschnitte (33, 34) in Längsrichtung des Resonators zueinander angeordnet sind,
**dadurch gekennzeichnet, dass**
- die dotierten Halbleiterabschnitte (33, 34) in Längsrichtung des Resonators (20) beabstandet zueinander angeordnet sind, und
- sich die zumindest zwei dotierten Halbleiterabschnitte (33, 34) jeweils lokal in einem Intensitätsminimum der stehenden optischen Welle befinden.

2. Elektrooptischer Modulator (10) nach Anspruch 1,
**dadurch gekennzeichnet, dass**
- in dem Resonator (20) ein Lichtwellenleiter (100, 23) aus halbleitendem Material vorhanden ist,
- sich die Längsrichtung des Lichtwellenleiters (100, 23) entlang der Längsrichtung des Resonators (20) erstreckt und
- die zumindest zwei dotierten Halbleiterabschnitte (33, 34) jeweils durch einen dotierten Halbleiterabschnitt des Lichtwellenleiters (100, 23) gebildet sind.

3. Elektrooptischer Modulator (10) nach Anspruch 2,
**dadurch gekennzeichnet, dass**
sich alle dotierten Halbleiterabschnitte (33, 34) des Lichtwellenleiters (100, 23) ausschließlich in Intensitätsminima der stehenden optischen Welle befinden.

4. Elektrooptischer Modulator (10) nach einem der voranstehenden Ansprüche,
**dadurch gekennzeichnet, dass**
- einer (33) der zumindest zwei dotierten Halbleiterabschnitte (33, 34) p-dotiert und der andere (34) n-dotiert ist und
- die dotierten Halbleiterabschnitte (33, 34) eine pn- oder eine pin-Diode (30) bilden, die sich entlang der Längsrichtung des Resonators (20) erstreckt.

5. Elektrooptischer Modulator (10) nach einem der voranstehenden Ansprüche,
**dadurch gekennzeichnet, dass**
der Resonator (20) an seinen Resonatorgrenzen jeweils einen Spiegelabschnitt (21, 22) umfasst.

6. Elektrooptischer Modulator (10) nach Anspruch 5,
**dadurch gekennzeichnet, dass**
zumindest einer der Spiegelabschnitte (21, 22) durch einen Lichtwellenleiterabschnitt (101, 103) gebildet ist, in dem Löcher (200) vorhanden sind.

7. Elektrooptischer Modulator (10) nach Anspruch 5 oder 6,
**dadurch gekennzeichnet, dass**
zumindest einer der Spiegelabschnitte (21, 22) durch einen Lichtwellenleiterabschnitt (101, 103) gebildet ist, dessen Breite und/oder Höhe variiert.

8. Elektrooptischer Modulator (10) nach einem der voranstehenden Ansprüche,
**dadurch gekennzeichnet, dass**
der elektrooptische Modulator (10) einen Lichtwellenleiter (23, 100) aus Halbleitermaterial umfasst, der mit einem ersten Abschnitt (101) einen ersten Spiegelabschnitt (21) des Resonators (20) bildet, mit einem zweiten Abschnitt (102) im Inneren des Resonators (20) angeordnet ist und mit einem dritten Abschnitt (103) einen zweiten Spiegelabschnitt (22) des Resonators (20) bildet.

9. Elektrooptischer Modulator (10) nach einem der voranstehenden Ansprüche 2-8,
**dadurch gekennzeichnet, dass**
der Lichtwellenleiter (23, 100) ein in einem SOI-Substrat integrierter Silizium-Wellenleiter (100) ist.

10. Verfahren zum Modulieren optischer Strahlung, bei dem
- die optische Strahlung in einen elektrooptischen Modulator (10) mit mindestens einem optischen Resonator (20) eingespeist wird, wodurch sich in dem Resonator (20) eine stehende optische Welle ausbildet, und
- zumindest zwei dotierte Halbleiterabschnitte (33, 34) elektrisch angesteuert werden, **dadurch gekennzeichnet, dass** die dotierten Halbleiterabschnitte (33, 34) in Längsrichtung des Resonators (20) beabstandet zueinander angeordnet sind und sich jeweils lokal in einem Intensitätsminimum der stehenden optischen Welle befinden.

## Claims

1. Electro-optic modulator (10) for the modulation of the optical radiation of a predetermined wavelength, the electro-optic modulator (10) having at least one optical resonator (20) in which a standing optical wave can be formed for the predetermined wavelength, wherein, in the resonator, at least two doped semi-conductor sections (33, 34) are arranged with respect to one another in the longitudinal direction of the resonator,
**characterized in that**
- the doped semiconductor sections (33, 34) are arranged at a distance from one another in the longitudinal direction of the resonator (20),
and
- the at least two doped semiconductor sections (33,34) respectively lie locally at an intensity minimum of the standing optical wave.

2. Electro-optic modulator (10) according to Claim 1, **characterized in that**
- a light waveguide (100, 23) consisting of semiconductor material is present in the resonator (20),
- the longitudinal direction of the light waveguide (100, 23) extends along the longitudinal direction of the resonator (20), and
- the at least two doped semiconductor sections (33,34) are respectively formed by a doped semiconductor section of the light waveguide (100,23).

3. Electro-optic modulator (10) according to Claim 2, **characterized in that**
all doped semiconductor sections (33, 34) of the light waveguide (100, 23) lie exclusively at intensity minima of the standing optical wave.

4. Electro-optic modulator (10) according to one of the preceding claims,
**characterized in that**
- one (33) of the at least two doped semiconductor sections (33, 34) is p-doped and the other (34) is n-doped, and
- the doped semiconductor sections (33, 34) form a pn or pin diode (30), which extends along the longitudinal direction of the resonator (20).

5. Electro-optic modulator (10) according to one of the preceding claims,
**characterized in that**
the resonator (20) respectively comprises a mirror section (21, 22) at its resonator boundaries.

6. Electro-optic modulator (10) according to Claim 5,
**characterized in that**
at least one of the mirror sections (21, 22) is formed by a light waveguide section (101, 103) in which there are holes (200).

7. Electro-optic modulator (10) according to Claim 5 or 6,
**characterized in that**
at least one of the mirror sections (21, 22) is formed by a light waveguide section (101, 103) whose width and/or height varies.

8. Electro-optic modulator (10) according to one of the preceding claims,
**characterized in that**
the electro-optic modulator (10) comprises a light waveguide (23, 100) consisting of semiconductor material, which forms a first mirror section (21) of the resonator (20) with a first section (101), is arranged inside the resonator (20) with a second section (102), and forms a second mirror section (22) of the resonator (20) with a third section (103).

9. Electro-optic modulator (10) according to one of the preceding Claims 2-8,
**characterized in that**
the light waveguide (23, 100) is a silicon waveguide (100) integrated in an SOI substrate.

10. Method for the modulation of optical radiation, wherein
- the optical radiation is fed into an electro-optic modulator (10) having at least one optical resonator (20), so that a standing optical wave is formed in the resonator (20), and
- at least two doped semiconductor sections (33, 34) are electrically driven, **characterized in that** the doped semi-conductor sections (33, 34) are arranged at a distance from one another in the longitudinal direction of the resonator (20), and respectively lie locally at an intensity minimum of the standing optical wave.

## Revendications

1. Modulateur électro-optique (10) destiné à moduler un rayonnement optique ayant une longueur d'onde prédéterminée, dans lequel le modulateur électro-optique (10) comprend au moins un résonateur optique (20) dans lequel une onde optique stationnaire peut se former pour la longueur d'onde prédéterminée, dans lequel au moins deux sections semi-conductrices dopées (33, 34) sont disposées dans le résonateur dans la direction longitudinale du résonateur l'un par rapport à l'autre,
**caractérisé en ce que**
- les sections semi-conductrices dopées (33, 34) sont disposées de manière espacée l'une de l'autre dans la direction longitudinale du résonateur (20), et
- les au moins deux sections semi-conductrices dopées (33, 34) se situent respectivement dans un minimum d'intensité local de l'onde optique stationnaire.

2. Modulateur électro-optique (10) selon la revendication 1, **caractérisé en ce que**
- un guide d'ondes optique (100, 23) constitué d'un matériau semi-conducteur est présent dans le résonateur (20),
- la direction longitudinale du guide d'ondes optique (100, 23) s'étend suivant la direction longitudinale du résonateur (20), et
- les au moins deux sections semi-conductrices dopées (33, 34) sont respectivement formées par une section semi-conductrice dopée du guide d'ondes optique (100, 23).

3. Modulateur électro-optique (10) selon la revendication 2, **caractérisé en ce que**
toutes les sections semi-conductrices dopées (33, 34) du guide d'ondes optique (100, 23) se situent dans des minima d'intensité de l'onde optique stationnaire.

4. Modulateur électro-optique (10) selon l'une quelconque des revendications précédentes, **caractérisé en ce que**
- l'une (33) des deux sections semi-conductrices dopées (33, 34) est dopée p et l'autre (34) est dopée n, et
- les sections semi-conductrices dopées (33, 34) forment une diode pn ou pin (30) qui s'étend dans la direction longitudinale du résonateur (20).

5. Modulateur électro-optique (10) selon l'une quelconque des revendications précédentes, **caractérisé en ce que**
le résonateur (20) comprend à ses frontières respectives de résonateur une section formant miroir (21, 22).

6. Modulateur électro-optique (10) selon la revendication 5, **caractérisé en ce que**
au moins l'une des sections formant miroirs (21, 22) est formée par une section de guide d'ondes optique (101, 103) dans laquelle des trous (200) sont présents.

7. Modulateur électro-optique (10) selon la revendication 5 ou 6, **caractérisé en ce que**
au moins l'une des sections formant miroirs (21, 22) est formée par une section de guide d'ondes optique (101, 103) dont la largeur et/ou la hauteur varie(nt).

8. Modulateur électro-optique (10) selon l'une quelconque des revendications précédentes, **caractérisé en ce que**
le modulateur électro-optique (10) comprend un guide d'ondes optique (23, 100) constitué d'un matériau semi-conducteur qui forme avec une première section (101) une première section formant miroir (21) du résonateur (20), qui est disposé avec une deuxième section (102) à l'intérieur du résonateur (20) et qui forme avec une troisième section (103) une deuxième section formant miroir (22) du résonateur (20).

9. Modulateur électro-optique (10) selon l'une quelconque des revendications 2-8 précédentes, **caractérisé en ce que**
le guide d'ondes optique (23, 100) est un guide d'ondes optique au silicium (100) intégré dans un substrat de SOI.

10. Procédé destiné à moduler un rayonnement optique, dans lequel
- le rayonnement optique est injecté dans un modulateur électro-optique (10) comportant au moins un résonateur optique (20), de telle sorte qu'il se forme une onde optique stationnaire dans le résonateur (20), et
- au moins deux sections semi-conductrices dopées (33, 34) sont commandée électriquement, **caractérisé en ce que** les sections semi-conductrices dopées (33, 34) sont disposées de manière espacée l'une de l'autre dans la direction longitudinale du résonateur (20) et se situent respectivement dans un minimum d'intensité local de l'onde optique stationnaire.
